# EUROPEAN PATENT SPECIFICATION

(11) **EP 2 400 398 B1**
(45) Date of publication and mention of the grant of the patent: **19.12.2012**
(21) Application number: 10167063.6
(22) Date of filing: 23.06.2010
(51) Int. Cl.: G06F 13/42

(54) **Single-wire interface and interfacing method for connecting a digital device**
Einzeldraht-Schnittstelle und Schnittstellenverfahren zum Anschluss einer digitalen Vorrichtung
Interface monofil et procédé d'interfaçage pour connecter un dispositif numérique

(43) Date of publication of application: 28.12.2011
(73) Proprietor: Rohm Co., Ltd., Kyoto-shi, Kyoto 615-8585 (JP)
(72) Inventor: Hashimoto,Tetsuro, Ukyo-ku, Kyoto 615-8585 (JP)
(74) Representative: Isarpatent

(56) References cited:
- WO-A1-2006/004070
- US-A1- 2008 159 432
- DOWNS R ED - INSTITUTE OF ELECTRICAL AND ELECTRONICS ENGINEERS: "Using 1-Wire I/O for distributed system monitoring" 17TH DASC. THE AIAA/IEEE/SAE DIGITAL AVIONICS SYSTEMS CONFERENCE PROCEEDINGS. BELLEVUE, WA, OCT. 31 - NOV. 7, 1998; [DASC. DIGITAL AVIONICS SYSTEMS CONFERENCE], NEW YORK, NY : IEEE, US LNKD- DOI:10.1109/WESCON.1998.716439, 15 September 1998 (1998-09-15), pages 161-168, XP010305393 ISBN: 978-0-7803-5078-6

## Description

### Background

The present invention relates to a single-wire interface for connecting a digital device to a single-wire network, in particular to a network according to the 1-Wire^{®} network standard. Furthermore, the invention provides an interfacing method for interfacing between a digital device and a single-wire network.

Single-wire networks or communications bus systems rely on only two conductive connections both for communicating with and for supplying power to devices connected to the network or bus. Conventionally, one of the conductive connections, which may be grounded, is referred to as a common ground, whereas the other conductive connection is referred to as a single-wire. While either one or both of the single-wire connection and the common ground connection may be formed by conductive wires, a particular physical shape of the conductive connections is generally not required for the functioning of a single-wire network or bus. Likewise, there generally is no requirement for the conductive connection referred to as "common ground" to be physically grounded, i.e. connected to the earth.

Single-wire networks, which due to the simplicity of their conductive connections are robust, easy to handle and inexpensive, are e.g. used to communicate with small inexpensive devices such as digital thermometers and weather instruments. One example of a single-wire network standard is the 1-Wire^{®} device communications bus system designed by Dallas Semiconductor Corp., which provides low-speed data, signalling, and power over a single signal.

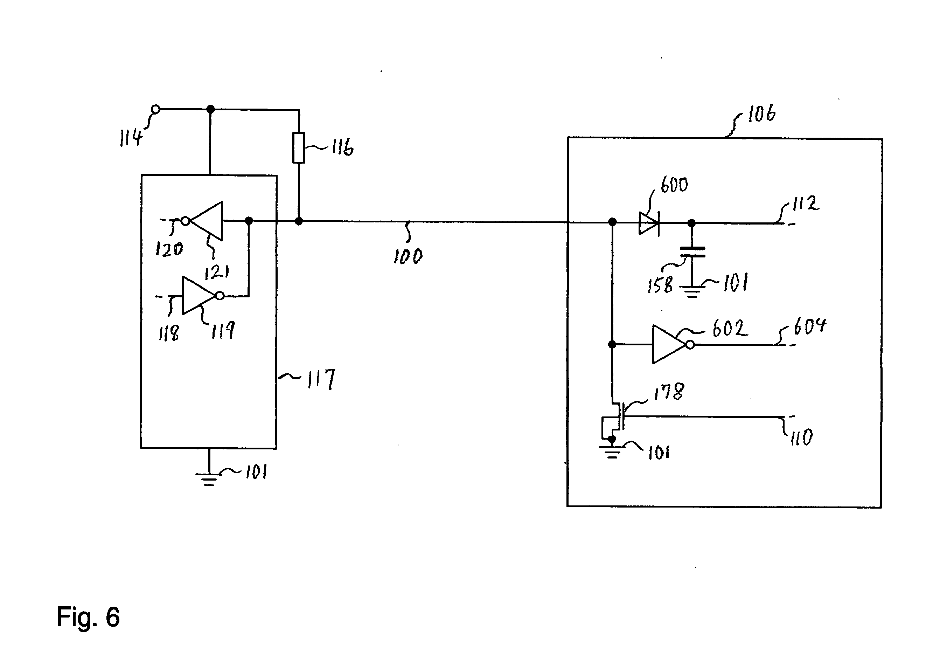

Figure 6 shows a conventional example of a 1-Wire^{®} network 100, 101 formed by a single-wire 100 and a common ground 101 as conductive connections between a network master device 117 such as a microcontroller and a controlled device 106. In this example, the controlled device 106 is assumed to be the 1024-bit, 1-Wire^{®} EEPROM chip DS2431 of Maxim Integrated Products, Inc. (http://datasheets.maxim-ic.com/en/ds/DS2431.pdf).

In the network 100, 101 of Fig. 6, the single-wire 100 on the side of the network master device 117 is connected via a pull-up resistor 116 to a supply voltage terminal 114, which supplies a constant supply voltage against the common ground 101 and provides power also to the network master device 117. Due to the pull-up resistor 116, the single-wire substantially assumes the potential of the supply voltage terminal 116 in an idle state where no lower-resistance connection between the single-wire 100 and the common ground 101 is active. The network master device 117 includes a master data output inverter 119 having an input 118 connected to data transmission circuitry (not shown) and an output connected to the single-wire 100. The network master device 117 further includes a master data input inverter 121 having an input connected to the single-wire 100 and an output 120 connected to data reception circuitry (not shown).

The controlled device 106 includes a diode 600 having an anode connected to the single-wire 100 and a cathode connected to a first end of a storage capacitor 158 of the controlled device 106 and to a device power input 112 for supplying power to the controlled device 106. The second end of the storage capacitor 158 is connected to the common ground 101. The controlled device 106 furthermore includes a data input inverter 602 having an input connected to the single-wire 100 and an output connected to a device data input 604 of data reception circuitry (not shown) of the controlled device 106. For transmitting data to the network 100, 101, the controlled device 106 comprises a network output transistor 178 in so-called open-drain configuration, having a drain end connected to the single-wire 100 and a source end connected to ground 101 A gate end of the network output transistor 178 is connected to a device data output 110 of data transmission circuitry (not shown) of the controlled device 106.

In operation, the single-wire 100 during the idle state supplies power from the supply voltage terminal 114 via the diode 600 to the storage capacitor 158, charging the storage capacitor 158 to a constant voltage that is lower than the supply voltage by a difference amount given by the forward voltage drop of the diode 600. In order to communicate to the controlled device 106, the network master device 117 transmits a command signal pulse to the network 100, 101 by using its master data out inverter 119 to pull down the potential of the single-wire 100 to common-ground 101 level for a predefined duration of the command signal pulse. The command signal pulse is relayed by the data input inverter 602 to the data reception circuitry of the controlled device 106. In order to transmit a reply signal pulse over the network 100, 101 to the network master device 117, the data transmission circuitry of the controlled device 106 controls the network output transistor 178 to switch, for a predefined duration of the reply signal pulse, from its non-conductive idle state to a conductive state to pull down the potential of the single-wire 100 to common-ground 101 level. The master data inverter 121 of the network master device 117 relays the reply signal pulse to the master data reception circuitry 120.

During each of the command and reply signal pulses, power transfer from the supply voltage terminal 114 over the single-wire 100 is interrupted, such that the digital device 106 draws power from the energy stored by the storage capacitor 158 while the diode 600 blocks a discharge of the storage capacitor 158 into the single-wire 100. The capacitance of the storage capacitor 600 is chosen such that the stored voltage does not drop beyond a required minimum voltage of the digital device 106 before the storage capacitor is recharged after the signal pulse has ended.

In order for a single-wire network as described above to function, the controlled device has to be specially designed to match the requirements of the single-wire network employed, e.g. of the 1-Wire^{®} standard, leading to complicated development efforts for providing the controlled device that counteract advantages such as simplicity, robustness and cost of the single-wire network technology.

### Disclosure of the invention

Accordingly, a single-wire interface for connecting a digital device to a single-wire network is provided, wherein the single-wire network includes a single-wire and a common ground. The single-wire interface comprises a signal pulse transmitter for transmitting a signal pulse from the single-wire network to a data input of the digital device, and a delay interval unit for providing a predefined delay interval, which is longer than a predefined short-pulse length of the single-wire network and shorter than a predefined long-pulse length of the single-wire network, and which starts from a pulse start of the signal pulse at the data input. Further, the single-wire interface comprises a clock pulse transmitter connected to an output of the delay interval unit, for transmitting, after the predefined delay interval, a clock pulse to a clock input of the digital device.

Because the single-wire interface comprises both the signal pulse transmitter and the clock pulse transmitter, the single-wire interface enables a digital device having more than one input, i.e. a digital device designed for other types of networks or buses having more than two conductive connections to be connected to the single-wire network. In operation, the signal pulse transmitter transmits a signal pulse received from the single-wire network to the digital device, while the delay interval unit is configured to start the delay interval when the signal pulse reaches the signal input of the digital device, the clock pulse transmitter being configured to transmit the clock pulse to the digital device after the passing of the delay interval. In consequence, one signal pulse reaching the single-wire interface from the single-wire network results causes the single-wire interface to transmit two pulses, the signal pulse itself and the clock pulse, to the signal input and the clock input, respectively, of the digital device.

Due to the presence of the delay interval unit, the clock pulse, as compared to the signal pulse, reaches the digital device with a delay corresponding to the predefined delay interval. Because the predefined delay interval is longer than the predefined short-pulse length of the single-wire network, in a case where the signal pulse received from the single-wire network has the predefined short-pulse length, the signal pulse at the signal input of the digital device will have ended when the clock pulse arrives at the clock input of the digital device. Because the predefined delay interval is shorter than the predefined long-pulse length of the single-wire network, in a case where the signal pulse received from the single-wire network has the predefined long-pulse length, the signal pulse at the signal input of the digital device will not have ended when the clock pulse arrives at the clock input of the digital device.

In other words, at the moment the clock pulse is detectable by the digital device at its clock input, the signal level at the signal input of the digital device is at a first predefined level signifying an ongoing pulse in the case of the signal pulse having the long-pulse length, and the signal level at the signal input of the digital device is at a second predefined level signifying an idle state in the case of the signal pulse having the long-pulse length. This enables a digital device having been designed to receive data input by detecting a signal level at a signal input during a signal level transition at a clock input to be connected to a single-wire network such as according to the 1-Wire^{®} standard where different data values are represented by signal pulses of different lengths. Consequently, existing digital devices previously designed for traditional multi-wire networks and buses such as serial buses are enabled to be utilized with single-wire network technology, thus significantly simplifying development. This leads not only to a reduction in development cost but also to increased reliability because tested designs are enabled to be adapted by adding the inventive interface.

Under a further aspect, the invention provides an interfacing method for interfacing between a digital device and a single-wire network. First, a signal pulse is received from the single-wire network. The signal pulse is transmitted to a data input of the digital device. A predefined delay interval is provided that is longer than a predefined short-pulse length of the single-wire network and shorter than a predefined long-pulse length of the single-wire network, starting from a pulse start of the signal pulse at the data input. After the predefined delay interval, a clock pulse is transmitted to a clock input of the digital device.

According to a preferred development, the single-wire interface comprises a flip-flop having a trigger input connected to the single-wire and an output connected to an input of the delay interval unit. Because the output level of the flip-flop will be maintained once it has been set by a signal pulse received at the trigger input, independent from the duration of the signal pulse, the predefined delay interval is enabled to be provided by the delay interval unit independently of the signal pulse duration in a particularly simple way.

Preferably, the delay interval unit comprises at least one delay element. Each delay element of the delay interval unit includes a delay element capacitor connected between an output of that delay element and the common ground, a delay element resistor having a first end connected to the output of the delay element, and a delay element logic gate connected between an input of the delay element and the second end of the delay element resistor. In this way, the delay interval is defined in a simple way, through the capacitances of the delay element capacitors and resistances of the delay element resistors.

Preferably, the signal pulse transmitter comprises a Schmitt trigger connected between the single-wire and the trigger input of the flip-flop, enabling to use, with the single-wire network, a digital device designed to expect a high slew rate of the signal pulse. Also preferably, the single-wire interface further comprises a feedback unit connected between the output of the delay unit and a reset input of the flip-flop. By feeding back the output signal of the flip-flop after having been delayed in the delay interval unit, the flip-flop is reset such that the duration of the clock pulse is fixed to the predetermined delay interval, independently of the duration of the signal pulse, in a simple way.

According to a preferred development, the single-wire interface further comprises a network output switching element connected between the single-wire and the common ground, for outputting a network output pulse to the single-wire network, and a network output blocking gate for blocking the network output pulse during the clock pulse. Preferably, the network output blocking gate has an output connected to a control end of the network output switching element, a first input connected to the output of the delay interval unit, and a second input for connection to a data output of the digital device. In this way, an overlap of the input and output pulses on the single-wire network is avoided, which enables to utilize, with a single-wire network, digital devices that have been originally designed to transmit an output pulse after a delay with respect to the preceding input pulse by an interval that is shorter than the long-pulse pulse length predefined on the single-wire network.

According to a preferred development, the single-wire interface further comprises a voltage-supply switching element having an input end connected to the single-wire, a voltage-supply capacitor connected between an output end of the voltage-supply switching element and the common ground, and a controller circuit connected to a control end of the voltage-supply switching element. The controller circuit is configured to control the voltage-supply switching element to switch between a conducting state and a non-conducting state, based on a voltage difference between the input end and the output end of the voltage-supply switching element. This enables to derive a supply voltage for the digital device from the signal voltage on the single-wire by selectively preventing a discharge of the voltage-supply capacitor to the single-wire when the signal level on the single-wire is low, without making use of a conventional diode. Consequently, a reduction of the supply voltage due to the forward bias voltage across a conventional diode is avoided, which enables to utilize, with a single-wire network, digital devices that have been designed to require a higher supply voltage than is conventionally derivable from the single-wire network, e.g. a supply voltage that is higher than a maximum signal level on the single-wire network minus the bias forward voltage of a conventional diode. Preferably, the controller circuit is configured to switch the voltage-supply switching element to a conductive state when a potential difference between the single-wire and the common ground exceeds a potential difference across the voltage supply capacitor, such that for high efficiency the voltage capacitor is directly charged from the single-wire whenever possible, while discharge to the single-wire is prevented.

According to a preferred development, the controller circuit is a logic inverter circuit, which is simple to implement. Preferably, the controller circuit comprises a first transistor of a first polarity type connected between the common ground and the control end of the voltage-supply switching element, and a second transistor of a second polarity type connected between the control and the output ends of the voltage-supply switching element, control ends of the first and second transistors being connected to the input end of the voltage-supply switching element.

According to a preferred development, the single-wire interface further comprises a voltage supply regulator having a regulator input connected to the output end of the voltage-supply switching element, and a regulator output for supplying a regulated supply voltage to a voltage supply input of the digital device. This enables to utilize, with a single-wire network, digital devices that have been designed to require a highly stable supply voltage. Also, a smaller capacity of the voltage supply capacitor is enabled to be chosen, resulting in a reduced die area requirement in a case where the digital device is implemented as an integrated circuit.

### Brief description of the figures

Further aspects are illustrated in the accompanying drawing and described in detail in the following part of the description. In the figures,
- Fig. 1: is a circuit diagram of a single-wire network including a digital device connected to the single-wire network via a single-wire network interface according to an embodiment of the invention;
- Fig. 2A-B: is a timing diagram illustrating the generation of a supply voltage for a digital device from a single-wire network signal by a single-wire network interface according to an embodiment of the invention;
- Fig. 3A-C: is a timing diagram illustrating the transmission of a single-wire network signal pulse having a predefined short-pulse length and of a related clock pulse to a digital device, by a single-wire network interface according to an embodiment of the invention;
- Fig. 4A-C: is a timing diagram illustrating the transmission of a single-wire network signal pulse having a predefined long-pulse length and of a related clock pulse to a digital device, by a single-wire network interface according to an embodiment of the invention;
- Fig. 5A-C: is a timing diagram illustrating the blocking of an output pulse to a single-wire network, by a single-wire network interface according to an embodiment of the invention; and
- Fig. 6: is circuit diagram of a conventional single-wire network including a digital device connected to the single-wire network.

Unless explicitly stated otherwise, throughout the figures the same reference numbers indicate the same or functionally equivalent means.

### Detailed description

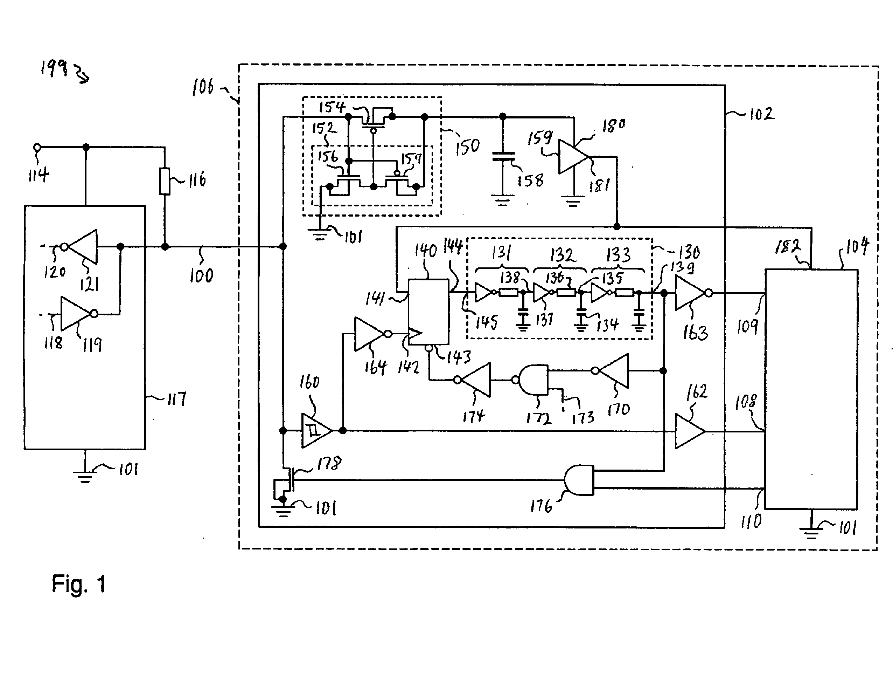

Figure 1 shows a circuit diagram of a single-wire network system 199 comprising a network master device 117 such as a microcontroller and a memory device 106 such as an EEPROM device connected by a single-wire network 100, 101 e.g. according to the 1-Wire^{®} network standard. The single-wire network 100, 101 is formed by two conductive connections referred to in the following as single-wire 100 and common ground 101. Although in the present embodiment, the single-wire 100 and the common ground 101 may be assumed to be formed e.g. as physical wire connections, the common ground 101 being connected to the Earth, in alternative embodiments either or both of the two conductive connections take other physical forms. Furthermore, in alternative embodiments the single-wire 100 only or none of the two conductive connections is connected to the Earth.

The memory device 106 comprises a digital device 104 providing EEPROM functionality and a single-wire interface 102 connecting the digital device 104 to the single-wire network 100, 101. For example, the memory device 106 may be implemented as an integrated circuit, wherein the digital device 104 and the single-wire interface module 102 occupy different regions on a single chip.

The digital device 104 is assumed to have been originally designed for use with a different type of network or bus system comprising separate data and clock lines, such as a conventional serial bus. The digital device 104 comprises a device clock input 109 for receiving a clock pulse having a rising edge where the signal level quickly transitions from logical LO to logical HI level, and a device data input 108 for either a logical LO or logical HI level being applied to during the time of the signal level transition of the clock pulse from logical LO to logical HI. The digital device 104 is configured such that a "zero" bit is received by the digital device 104 when the device data input 108 is at logical LO level during a rising edge of the clock signal at the device clock input 109, and a "one" bit is received when the device data input 108 is at logical LO level during a rising edge of the clock signal at the device clock input 109. The digital device furthermore comprises a device data output 110 as well as a connection to ground 101 and a voltage supply input 182 for receiving a supply voltage against ground 101 for powering the digital device 104.

The single-wire interface 102 comprises a diode equivalent circuit 150, a voltage-supply capacitor 158, and a voltage supply regulator 159, which together form a voltage supply unit 150, 158, 159 for supplying power derived from the single-wire network signal to the digital device and to the single-wire interface 102 itself.

The diode equivalent circuit 150 includes a p-channel field effect transistor as a voltage-supply transistor 154, which has a drain end connected to the single-wire 101 and a source end connected to a first end of the voltage-supply capacitor 158 and a regulator input 180 of the voltage supply regulator 159. The second end of the voltage-supply capacitor 158 is connected to ground 101, while a regulator output 181 of the supply voltage regulator 159 is connected to the voltage supply input 182 of the digital device 104. The diode equivalent circuit 150 further includes a controller circuit 152 connected to a gate end of the voltage-supply transistor 154 as well as to the drain and source ends of the same, and is configured to switch the voltage-supply transistor 154 based on a voltage difference between the input end and the output end of the voltage-supply transistor 154.

In the present embodiment, the controller circuit 152 is configured as a logic inverter circuit having a first inverter transistor 156 connected between ground 101 and the gate end of the voltage-supply transistor 154, and a second inverter transistor 157 connected between the gate and the source ends of the voltage-supply transistor 154. The first inverter transistor 156 is an n-channel field effect transistor, and the second inverter transistor 157 is a p-channel field effect transistor, gate ends of the first 156 and second 157 inverter transistors being connected to the drain end of the voltage-supply transistor 154.

The single-wire interface 102 further comprises a Schmitt trigger 160 having an input connected to the single-wire 100, and an output connected via an intervening data output amplifier 162 to the device data input 108 of the digital device 104. Together, the Schmitt trigger 160 and the data output amplifier 162 form a signal pulse transmitter 160, 162 for transmitting a signal pulse from the single-wire network 100, 101 to the data input 108 of the digital device 104.

The single-wire interface 102 further comprises a D-flip-flop 140 having a flip-flop clock input 142 connected via an intervening flip-flop clock input inverter 164 to the output of the Schmitt trigger 160. The D-flip-flop 140, which is of the most common flip-flop type in use today, also known as "delay flip-flop", has a D-input 141 and an output 144 always takes on the state of the D-input at the moment of a positive signal edge at the flip-flop clock input 142. The D-input 141 is connected to the regulator output 181 of the supply voltage regulator 159 and thus constantly supplied with a logic HI level.

The output 144 of the D-flip-flop 140 is connected to an input 145 of a delay interval unit 130 configured to delay a signal supplied to its input 145 by a predefined delay interval. The delay interval unit 130 comprises an odd number (here exemplarily shown as three) of delay element 131-133 connected in series. Each of the delay elements 131-133 includes a delay element capacitor 134 connected between an output 135 of the delay element 132 and the common ground 101, a delay element resistor 136 having a first end connected to the output 135 of the delay element 132, and a delay element inverter 137 connected between an input 138 of the delay element 132 and the second end of the delay element resistor 136. The input of the first delay element 131 is connected to the input 145 of a delay interval unit 130, and the output of the last delay element 133 is connected to an output 139 of the delay interval unit 130.

The output 139 of the delay interval unit 130 is connected via an intervening inverter 163 to the device clock input 109. Furthermore, the output 139 of the delay interval unit 130 is also connected via a feedback unit 170, 172, 174 to a reset input 143 of the D-flip-flop 140. The feedback unit 170, 172, 174 comprises a first feedback inverter 170 having an input connected to the output 139 of the delay interval unit 130, a feedback NAND gate 172 having a first input connected to an output of the first feedback inverter 170, and a second feedback inverter 174 having an input connected to the output of the feedback NAND gate 172, an output of the second feedback inverter 174 being connected to the reset input 143 of the D-flip-flop 140. A second input of the feedback NAND gate 172 is connected to an inverted-reset signal circuitry 173 (shown abbreviated) of the memory device 106 that is e.g. configured to be triggered as part of the power-up process.

The single-wire interface 102 further comprises an AND gate having a first input connected to the output 139 of the delay interval unit 130 and a second input connected to the device data output 110 of the digital device 104. An output of the AND gate is connected to a gate end of a network output transistor 178, which is an n-channel field effect transistor connected in so-called open-drain configuration with its drain end to the single-wire 100 and its source end to the common ground 101.

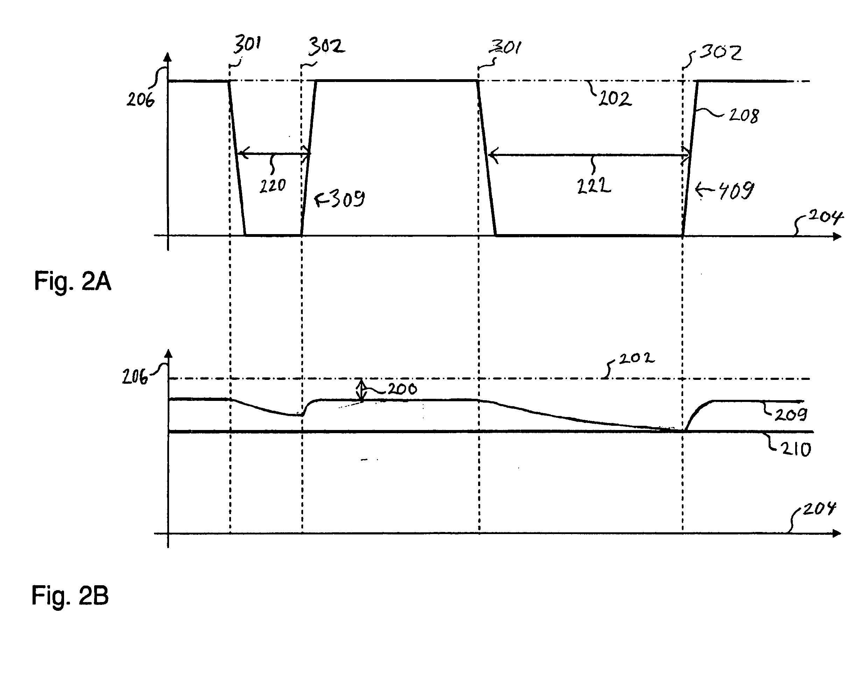

In the following, the operation of the single-wire device network system 199 shown in Fig. 1 will be described by making reference to Figs. 2-5. Figure 2A shows, along a horizontal time axis 204, a time graph of an example of a single-wire signal 208 transmitted in operation by the network master device 117 over the single-wire network 100, 101 to the memory device 106. The graph of the single-wire signal 208 represents, along a vertical voltage axis 206, the voltage level of the single-wire 100. In the initial idle state, the single-wire signal 208 substantially assumes the voltage level of the constant supply voltage 202 that is supplied to the network master device 117 at its supply voltage terminal 114. During a signal pulse 309, 409 the voltage level of the single-wire signal 208 substantially drops to zero, and rises back to substantially the voltage level of the constant supply voltage 202 after the signal pulse 309, 409 has ended. The network standard of the single-wire network 100, 101 specifies short pulses 309 having a predefined short-pulse length 220 and long pulses 409 having a predefined long-pulse length 222, wherein a short pulse 309 is used for transmitting a "one" bit, and a long pulse 409 is used for transmitting a "zero" bit over the single-wire network 100, 101.

As the voltage level of the single-wire signal 208 changes, the controller circuit 152 of the diode equivalent circuit 150 switches the voltage-supply transistor 154 to a conductive state when the voltage level of the single-wire signal 208 exceeds the voltage across the voltage supply capacitor 158, thus enabling the voltage-supply capacitor 158 to be charged, and switches the voltage-supply transistor 154 to a nonconductive state when the voltage level of the single-wire signal 208 is lower than the voltage across the voltage supply capacitor 158, thus preventing the voltage-supply capacitor 158 from bleed its charge into the single-wire 100. Assuming a substantially constant current consumption of the memory device 106, this leads to a substantially exponential decline of the voltage 209 across the voltage-supply capacitor 158 during signal pulses 309, 409, as is shown in Figure 2B, placed below Fig. 2A in the form of a timing diagram.

In the idle state after a signal pulse 309, 409 has ended 302, i.e. between signal pulses 309, 409, the voltage 209 across the voltage-supply capacitor 158 rises to a constant maximum value that is lower than the supply voltage 202 by a difference 200 given by the voltage drop across the voltage-supply transistor 154. The voltage 209 across the voltage-supply capacitor 158 is supplied to the input 180 of the voltage supply regulator 159, which provides at its output 181 a constant regulated supply voltage 210 at approximately a level corresponding to the voltage 209 across the voltage-supply capacitor 158 at the end 302 of a long-pulse length 222 signal pulse 409.

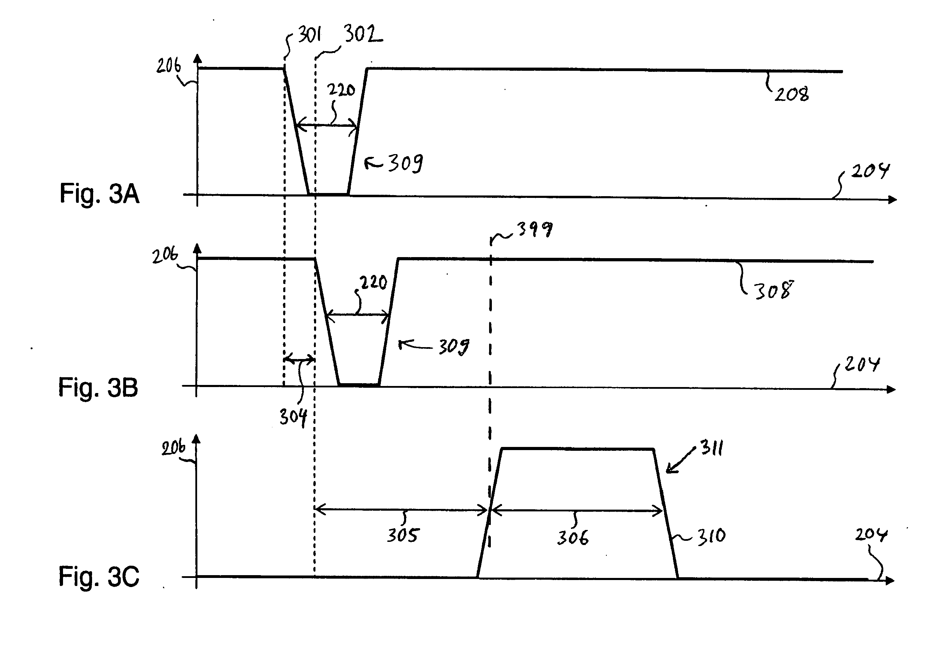

Fig. 3A-C is a timing diagram illustrating the transmission of a short-pulse length 220 signal pulse from the network master device 117 to the memory device 106. In Fig. 3A, the level of the single-wire signal 208 is shown, which is supplied to the input of the Schmitt trigger 160 of the single-wire interface 102, appearing as a Schmitt trigger output signal 308 shown in Fig. 3B at the output of the Schmitt trigger 160 having a constant time delay 304 due to the inherent properties of the Schmitt trigger 160.

When the signal level of the Schmitt trigger output signal 308 drops at the beginning 302 of the delayed short-pulse length 220 signal pulse 309, the signal at the output of the flip-flop clock input inverter 164 rises to logical HI such that the clock input 142 of the D-flip-flop 140 is triggered and the flip-flop output 144 assumes the same HI level constantly present at its D-input 141. The rise of the signal level at the flip-flop output 144 is supplied to input 145 the delay interval unit 130 and appears - logically reversed due to the odd number of inverters 137 present in the delay elements 131-133 - at the output 139 of the delay interval unit 130.

The fall to logic LO at the output 139 of the delay interval unit 130 is supplied - again logically reversed by the intervening inverter 163 - as a rise to logic HI at the clock input 109 of the digital device 104. This rising edge 399 of the clock signal 310 - shown in Fig. 3C - is delayed with respect to the pulse start 302 of the signal pulse 309, which is supplied from the output of the Schmitt trigger 160 to the device data input 108 of the digital device 104, by precisely the predefined delay interval 305 provided by the delay interval unit 130. Because the predefined delay interval 305 is longer than the predefined short-pulse length 220, the short-pulse length 220 signal pulse 309 at the device data input 108 has already ended at the time of the rising edge 399 of the clock signal 310 such that a logic HI level is present at the device data input 108. Consequently, the digital device 104 detects the reception of a "one" bit.

During normal operations, the inverted-reset circuitry supplies a logic HI to the feedback NAND gate 172, such that the fall to logic LO at the output 139 of the delay interval unit 130 is furthermore supplied via the feedback unit 170, 172, 174 - logically inverted due to the joint action of the two feedback inverters 170, 174 and the feedback NAND gate 172 - to the reset input 143 of the D-flip-flop 140. Consequently, the flip-flop output 144 is reset to logic LO, which after the predefined delay interval 305 leads to a corresponding rise to logic HI at the output 139 of the delay interval unit 130, and thus to a falling edge at the device clock input 109. Figure 3C shows the clock pulse 311 thus transmitted to the device clock input 109 to be of a duration 306 equal to the predefined delay interval 305.

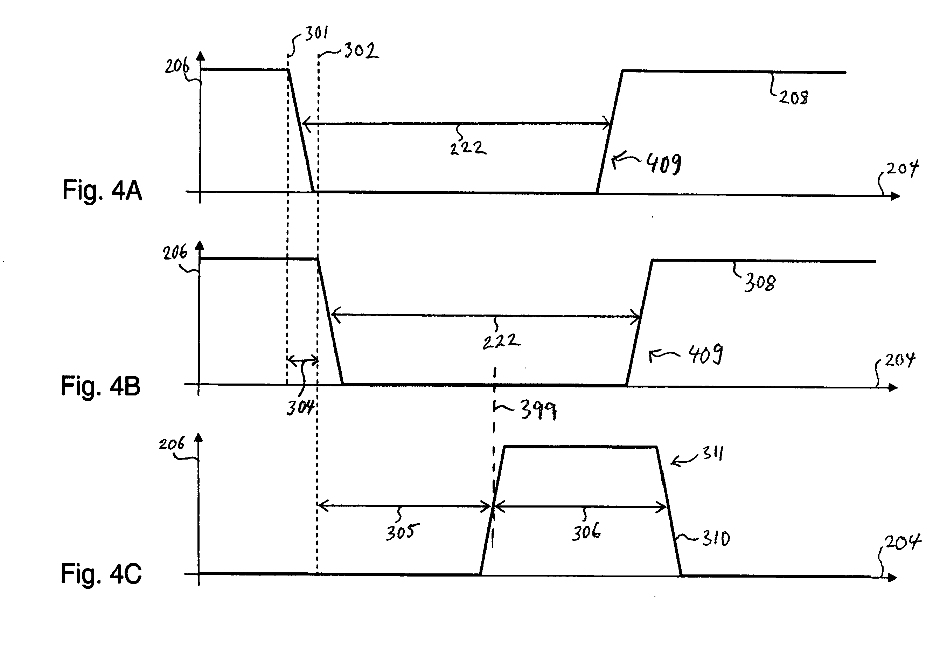

Fig. 4A-C is a timing diagram illustrating the transmission of a long-pulse length 222 signal pulse 409 from the network master device 117 to the memory device 106. In Fig. 3A, the level of the single-wire signal 208 is shown, which is supplied to the input of the Schmitt trigger 160 of the single-wire interface 102, appearing as a Schmitt trigger output signal 308 shown in Fig. 4B at the output of the Schmitt trigger 160 having the constant time delay 304. The following events correspond to the case of the short-pulse length pulse described above. However, because the predefined delay interval 305 is shorter than the predefined long-pulse length 222, the long-pulse length 222 signal pulse 409 at the device data input 108 is ongoing at the time of the rising edge 399 of the clock signal 310 such that a logic LO level is present at the device data input 108. Consequently, the digital device 104 detects the reception of a "zero" bit.

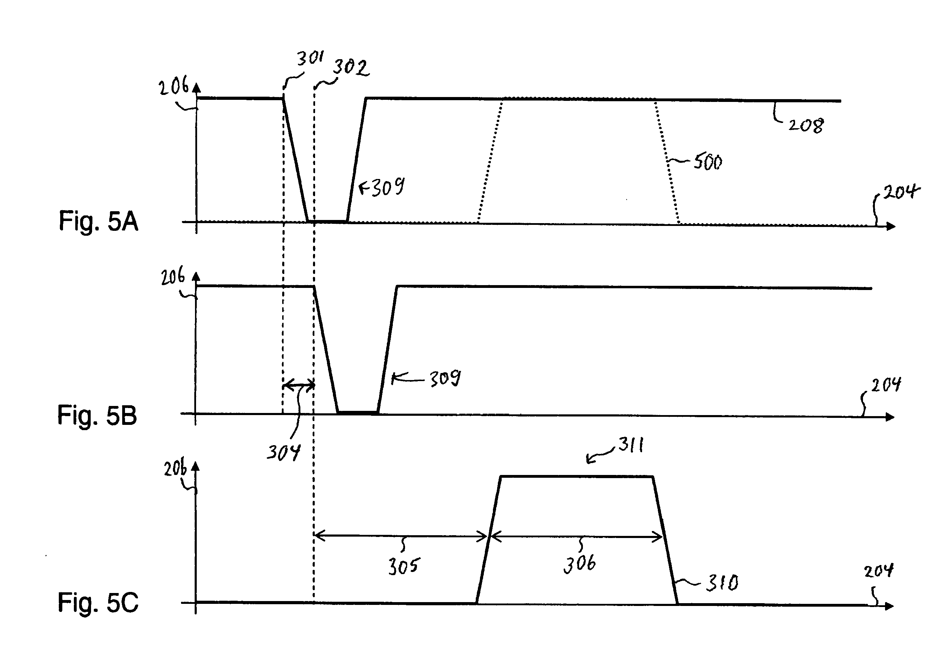

Simultaneously to the clock pulse 310, the fall to logic LO at the output 139 of the delay interval unit 130 is also supplied to the first input of the AND gate 176. When the data output 110 of the digital device 104 outputs a signal pulse to the second input of the AND gate 176, only a portion of the output pulse that does not overlap with the clock pulse 306 is transmitted from the output of the NAND gate 176 to the gate end of the network output transistor 178. Consequently the network output transistor will pull down the signal level on the single-wire 100 only after the clock pulse 311 has ended, thus safely avoiding collisions of signal pulses on the single-wire network 100, 101. Fig. 5A-C is a timing diagram illustrating the blocking of an output pulse to the single-wire network, showing the blocked interval 500 where no output pulse is transmitted to the single-wire network.

## Claims

1. Single-wire interface (102) for connecting a digital device (104) to a single-wire network (100, 101) comprising a single-wire (100) and a common ground (101), the single-wire interface (102) comprising:
- a signal pulse transmitter (160, 162) for transmitting a signal pulse (309, 409) from the single-wire network (100, 101) to a data input (108) of the digital device (104); **characterised by**
- a delay interval unit (130) for providing a predefined delay interval (305), longer than a predefined short-pulse length (220) of the single-wire network (100, 101) and shorter than a predefined long-pulse length (222) of the single-wire network (100, 101), from a pulse start (302) of the signal pulse (309, 409) at the data input (108); and
- a clock pulse transmitter (163) connected to an output (139) of the delay interval unit (130), for transmitting, after the predefined delay interval (305), a clock pulse (311) to a clock input (109) of the digital device (104).

2. Single-wire interface (102) according to claim 1, further comprising a flip-flop (140) having:
- a trigger input (142) connected to the single-wire (100); and
- an output (144) connected to an input (145) of the delay interval unit (130).

3. Single-wire interface (102) according to claim 2, wherein the signal pulse transmitter (160, 162) comprises a Schmitt trigger (160) connected between the single-wire (100) and the trigger input (142) of the flip-flop (140).

4. Single-wire interface (102) according to claim 2 or 3, further comprising a feedback unit (170, 172, 174) connected between the output (139) of the delay unit (130) and a reset input (143) of the flip-flop (140).

5. Single-wire interface (102) according to one of the preceding claims, wherein the delay interval unit (130) comprises at least one delay element (131-133), each delay element (131-133) including:
- a delay element capacitor (134) connected between an output (135) of the delay element (132) and the common ground (101);
- a delay element resistor (136) having a first end connected to the output (135) of the delay element (132); and
- a delay element logic gate (137) connected between an input (138) of the delay element (132) and the second end of the delay element resistor (136).

6. Single-wire interface (102) according to one of the preceding claims, further comprising:
- a network output switching element (178) connected between the single-wire (100) and the common ground (101), for outputting a network output pulse to the single-wire network (100, 101); and
- a network output blocking gate (176) for blocking the network output pulse during the clock pulse (311), and having an output connected to a control end of the network output switching element (178), a first input connected to the output (139) of the delay interval unit (130), and a second input for connection to a data output (110) of the digital device (104).

7. Single-wire interface (102) according to one of the preceding claims, further comprising:
- a voltage-supply switching element (154) having an input end connected to the single-wire (101);
- a voltage-supply capacitor (158) connected between an output end of the voltage-supply switching element (154) and the common ground (101); and
- a controller circuit (152) connected to a control end of the voltage-supply switching element (154) and configured to switch the voltage-supply switching element (154) based on a voltage difference between the input end and the output end of the voltage-supply switching element (154).

8. Single-wire interface (102) according to claim 7, wherein the controller circuit (152) is configured to switch the voltage-supply switching element (154) to a conductive state when a potential difference between the single-wire (100) and the common ground (101) exceeds a potential difference across the voltage supply capacitor (158).

9. Single-wire interface (102) according to claim 7 or 8, wherein the controller circuit (152) is a logic inverter circuit.

10. Single-wire interface (102) according to one of claims 7 to 9, wherein the controller circuit (152) comprises:
- a first transistor (156) of a first polarity type connected between the common ground (101) and the control end of the voltage-supply switching element (154); and
- a second transistor (157) of a second polarity type connected between the control and the output ends of the voltage-supply switching element (154), control ends of the first (156) and second (157) transistors being connected to the input end of the voltage-supply switching element (154).

11. Single-wire interface (102) according to one of claims 7 to 10, further comprising a voltage supply regulator (159) having:
- a regulator input (180) connected to the output end of the voltage-supply switching element (154); and
- a regulator output (181) for supplying a regulated supply voltage (210) to a voltage supply input (182) of the digital device (104).

12. interfacing method for interfacing between a digital device (104) and a single-wire network (100, 101) comprising a single-wire (100) and a common ground (101), the method comprising:
- receiving a signal pulse (309, 409) from the single-wire network (100, 101);
- transmitting the signal pulse (309, 409) to a data input (108) of the digital device (104); **characterised by**
- providing a predefined delay interval (305), longer than a predefined short-pulse length (220) of the single-wire network (100, 101) and shorter than a predefined long-pulse length (222) of the single-wire network (100, 101), from a pulse start (302) of the signal pulse (309, 409) at the data input (108); and
- transmitting, after the predefined delay interval (305), a clock pulse (311) to a clock input (109) of the digital device (104).

13. interfacing method according to claim 12, wherein the clock pulse (311) has a duration (306) substantially equal to the predefined delay interval (305).

14. interfacing method according to claim 12 or 13, further comprising:
- receiving an output pulse from the digital device (104);
- determining whether the clock pulse (311) is currently being transmitted;
- transmitting the output pulse to the single-wire network (100, 101) only while the clock pulse (311) is currently being transmitted.

15. interfacing method according to one of claims 12 to 14, further comprising:
- providing a voltage-supply switching element (154) having an input end connected to the single-wire (101), and a voltage-supply capacitor (158) connected between an output end of the volt-age-supply switching element (154) and the common ground (101);
- determining a voltage difference between the input end and an output end of the voltage-supply switching element (154);
- switching the voltage-supply switching element (154) based on the voltage difference to charge the voltage-supply capacitor (158).

## Patentansprüche

1. Einzeldraht-Schnittstelle (102) zum Verbinden eines digitalen Gerätes (104) mit einem Einzeldraht-Netzwerk (100, 101), das einen Einzeldraht (100) und eine gemeinsame Erdung (101) umfasst, wobei die Einzeldraht-Schnittstelle (102) Folgendes umfasst:
- einen Signalimpuls-Sender (160, 162) zum Senden eines Signalimpulses (309, 409) von dem Einzeldraht-Netzwerk (100, 101) zu einem Dateneingang (108) des digitalen Gerätes (104); **gekennzeichnet durch** eine Verzögerungsintervall-Einheit (130) zum Erzeugen eines vorgegebenen Verzögerungsintervalls (305), das länger ist als eine vorgegebene Kurzimpulslänge (220) des Einzeldraht-Netzwerks (100, 101) und kürzer ist als eine vorgegebene Langimpulslänge (222) des Einzeldraht-Netzwerks (100, 101), ab einem Impulsbeginn (302) des Signalimpulses (309, 409) an dem Dateneingang (108); und einen Taktimpulssender (163), der an einen Ausgang (139) der Verzögerungsintervall-Einheit (130) angeschlossen ist, zum Senden, nach dem vorgegebenen Verzögerungsintervall (305), eines Taktimpulses (311) an einen Takteingang (109) des digitalen Gerätes (104).

2. Einzeldraht-Schnittstelle (102) nach Anspruch 1, die des Weiteren einen Flipflop (140) umfasst, der Folgendes aufweist:
- einen Triggereingang (142), der an den Einzeldraht (100) angeschlossen ist; und
- einen Ausgang (144), der an einen Eingang (145) der Verzögerungsintervall-Einheit (930) angeschlossen ist.

3. Einzeldraht-Schnittstelle (102) nach Anspruch 2, wobei der Signalimpulssender (160, 162) einen Schmitt-Trigger (160) umfasst, der zwischen dem Einzeldraht (100) und dem Triggereingang (142) des Flipflop (140) angeschlossen ist.

4. Einzeldraht-Schnittstelle (102) nach Anspruch 2 oder 3, die des Weiteren eine Rückmeldungseinheit (170, 172, 174) umfasst, die zwischen dem Ausgang (139) der Verzögerungseinheit (130) und einem Reseteingang (143) des Flipflop (140) angeschlossen ist.

5. Einzeldraht-Schnittstelle (102) nach einem der vorangehenden Ansprüche, wobei die Verzögerungsintervall-Einheit (130) mindestens ein Verzögerungselement (131-133) umfasst, wobei jedes Verzögerungselement (131-133) Folgendes umfasst:
- einen Verzögerungselement-Kondensator (134), der zwischen einem Ausgang (135) des Verzögerungselements (132) und der gemeinsamen Erdung (101) angeschlossen ist;
- einen Verzögerungselement-Widerstand (136) mit einem ersten Ende, das an den Ausgang (135) des Verzögerungselements (132) angeschlossen ist; und
- ein Verzögerungselement-Logikgatter (137), das zwischen einem Eingang (138) des Verzögerungselements (132) und dem zweiten Ende des Verzögerungselement-Widerstands (136) angeschlossen ist.

6. Einzeldraht-Schnittstelle (102) nach einem der vorangehenden Ansprüche, die des Weiteren Folgendes umfasst:
- ein Netzwerkausgangs-Schaltelement (178), das zwischen dem Einzeldraht (100) und der gemeinsamen Erdung (101) angeschlossen ist, zum Ausgeben eines Netzwerkausgang-Impulses an das Einzeldraht-Netzwerk (100, 101); und
- ein Netzwerkausgangs-Sperrgatter (176) zum Sperren des Netzwerkausgang-Impulses während des Taktimpulses (311), und das Folgendes aufweist: einen Ausgang, der mit einem Steuerungsende des Netzwerkausgangs-Schaltelements (178) verbunden ist; einen ersten Eingang, der an den Ausgang (139) der Verzögerungsintervall-Einheit (1130) angeschlossen ist; und einen zweiten Eingang zum Anschluss an einen Datenausgang (110) des digitalen Gerätes (104).

7. Einzeldraht-Schnittstelle (102) nach einem der vorangehenden Ansprüche, die des Weiteren Folgendes umfasst:
- ein Spannungsversorgungs-Schaltelement (154) das ein Eingangsende aufweist, das an den Einzeldraht (101) angeschlossen ist;
- einen Spannungsversorgungs-Kondensator (158), der zwischen einem Ausgangsende des Spannungsversorgungs-Schaltelements (154) und der gemeinsamen Erdung (101) angeschlossen ist; und
- einen Steuerungsschaltkreis (152), der mit einem Steuerungsende des Spannungsversorgungs-Schaltelements (154) verbunden ist und dafür eingerichtet ist, das Spannungsversorgungs-Schaltelement (154) auf der Grundlage einer Spannungsdifferenz zwischen dem Eingangsende und dem Ausgangsende des Spannungsversorgungs-Schaltelements (154) zu schalten.

8. Einzeldraht-Schnittstelle (102) nach Anspruch 7, wobei der Steuerungsschaltkreis (152) dafür eingerichtet ist, das Spannungsversorgungs-Schaltelement (154) in einen leitfähigen Zustand zu schalten, wenn ein Potenzialunterschied zwischen dem Einzeldraht (100) und der gemeinsamen Erdung (101) einen Potenzialunterschied an dem Spannungsversorgungs-Kondensator (158) übersteigt.

9. Einzeldraht-Schnittstelle (102) nach Anspruch 7 oder 8, wobei der Steuerungsschaltkreis (152) ein logischer Inverterschaltkreis ist.

10. Einzeldraht-Schnittstelle (102) nach einem der Ansprüche 7 bis 9, wobei der Steuerungsschaltkreis (152) Folgendes umfasst:
- einen ersten Transistor (156) eines ersten Polaritätstyps, der zwischen der gemeinsamen Erdung (101) und dem Steuerungsende des Spannungsversorgungs-Schaltelements (154) angeschlossen ist; und
- einen zweiten Transistor (157) eines zweiten Polaritätstyps, der zwischen dem Steuerungs- und dem Ausgangsende des Spannungsversorgungs-Schaltelements (154) angeschlossen ist, wobei die Steuerungsenden des ersten (156) und des zweiten (157) Transistors an das Eingangsende des Spannungsversorgungs-Schaltelements (154) angeschlossen sind.

11. Einzeldraht-Schnittstelle (102) nach einem der Ansprüche 7 bis 10, die des Weiteren einen Spannungsversorgungsregler (159) umfasst, der Folgendes aufweist:
- einen Reglereingang (180), der an das Ausgangsende des Spannungsversorgungs-Schaltelements (154) angeschlossen ist; und
- einen Reglerausgang (181) zum Zuführen einer geregelten Versorgungsspannung (210) zu einem Spannungsversorgungseingang (182) des digitalen Gerätes (104).

12. Schnittstellenverfahren zum Herstellen einer Verbindung zwischen einem digitalen Gerät (104) und einem Einzeldraht-Netzwerk (100, 101), das einen Einzeldraht (100) und eine gemeinsame Erdung (101) umfasst, wobei das Verfahren Folgendes umfasst:
- Empfangen eines Signalimpulses (309, 409) von dem Einzeldraht-Netzwerk (100, 101);
- Senden des Signalimpulses (309, 409) zu einem Dateneingang (108) des digitalen Gerätes (104); **gekennzeichnet durch**
Erzeugen eines vorgegebenen Verzögerungsintervalls (305), der länger ist als eine vorgegebene Kurzimpulslänge (220) des Einzeldraht-Netzwerks (100, 101) und kürzer ist als eine vorgegebene Langimpulslänge (222) des Einzeldraht-Netzwerks (100, 101), ab einem Impulsbeginn (302) des Signalimpulses (309, 409) an dem Dateneingang (108); und Senden, nach dem vorgegebenen Verzögerungsintervall (305), eines Taktimpulses (311) zu einem Takteingang (109) des digitalen Gerätes (104).

13. Schnittstellenverfahren nach Anspruch 12, wobei der Taktimpuls (311) eine Dauer (306) hat, die im Wesentlichen dem vorgegebenen Verzögerungsintervall (305) entspricht.

14. Schnittstellenverfahren nach Anspruch 12 oder 13, das des Weiteren Folgendes umfasst:
- Empfangen eines Ausgangimpulses von dem digitalen Gerät (104);
- Feststellen, ob der Taktimpuls (311) momentan gesendet wird;
- Senden des Ausgangimpulses an das Einzeldraht-Netzwerk (100, 101) nur, während der Taktimpuls (311) momentan gesendet wird.

15. Schnittstellenverfahren nach einem der Ansprüche 12 bis 14, das des Weiteren Folgendes umfasst:
- Bereitstellen eines Spannungsversorgungs-Schaltelements (154) mit einem Eingangsende, das an den Einzeldraht (101) angeschlossen ist, und eines Spannungsversorgungs-Kondensators (158), der zwischen einem Ausgangsende des Spannungsversorgungs-Schaltelements (154) und der gemeinsamen Erdung (101) angeschlossen ist;
- Ermitteln einer Spannungsdifferenz zwischen dem Eingangsende und einem Ausgangsende des Spannungsversorgungs-Schaltelements (154);
- Schalten des Spannungsversorgungs-Schaltelements (154) auf der Grundlage der Spannungsdifferenz, um den Spannungsversorgungs-Kondensator (158) zu laden.

## Revendications

1. Interface monofil (102) pour connecter un dispositif numérique (104) à un réseau monofil (100, 101) comprenant un fil unique (100) et une masse commune (101), l'interface monofil (102) comprenant :
- un émetteur d'impulsion de signal (160, 162) pour transmettre une d'impulsion de signal (309, 409) à partir du réseau monofil (100, 101) à une entrée de données (108) du dispositif numérique (104) ;
**caractérisé par**
une unité d'intervalle de retard (130) pour fournir un intervalle de retard prédéfini (305), plus long qu'une longueur d'impulsion courte prédéfinie (220) du réseau monofil (100, 101) et plus court qu'une longueur d'impulsion longue prédéfinie (222) du réseau monofil (100, 101), à partir d'une impulsion de départ (302) de l'impulsion de signal (309, 409) à l'entrée de données (108) ; et
un émetteur d'impulsion d'horloge (163) connecté à une sortie (139) de l'unité d'intervalle de retard (130), pour transmettre, après l'intervalle de retard prédéfini (305), une impulsion d'horloge (311) à une entrée d'horloge (109) du dispositif numérique (104).

2. Interface monofil (102) selon la revendication 1, comprenant en outre une bascule (140) comportant :
- une entrée de déclenchement (142) connectée au fil unique (100) ; et
- une sortie (144) connectée à une entrée (145) de l'unité de l'intervalle de retard (930).

3. Interface monofil (102) selon la revendication 2, dans laquelle l'émetteur d'impulsion de signal (160, 162) comprend une bascule de Schmitt (160) connectée entre le fil unique (100) et l'entrée de déclenchement (142) de la bascule (140).

4. Interface monofil (102) selon la revendication 2 ou 3, comprenant en outre une unité de rétroaction (170, 172, 174) connectée entre la sortie (139) de l'unité de retard (130) et une entrée de remise à zéro (143) de la bascule (140).

5. Interface monofil (102) selon l'une quelconque des revendications précédentes, dans laquelle l'unité d'intervalle de retard (130) comprend au moins un élément de retard (131-133), chaque élément de retard (131-133) comprenant :
- un condensateur d'élément de retard (134) connecté entre une sortie (135) de l'élément de retard (132) et la masse commune (101) ;
- une résistance d'élément de retard (136) ayant une première extrémité connectée à la sortie (135) de l'élément de retard (132) ; et
- une porte logique d'élément de retard (137) connectée entre une entrée (138) de l'élément de retard (132) et la seconde extrémité de la résistance d'élément de retard (136).

6. Interface monofil (102) selon l'une quelconque des revendications précédentes, comprenant en outre :
- un élément de commutation de sortie de réseau (178) connecté entre le fil unique (100) et la masse commune (101), pour fournir en sortie une impulsion de sortie de réseau au réseau monofil (100, 101) ; et
- une porte de blocage de sortie de réseau (176), pour bloquer l'impulsion de sortie de réseau pendant l'impulsion d'horloge (311), et ayant une sortie connectée à une extrémité de commande de l'élément de commutation de sortie de réseau (178), une première entrée connectée à la sortie (139) de l'unité d'intervalle de retard (130), et une seconde entrée pour la connexion à une sortie de données (110) du dispositif numérique (104).

7. Interface monofil (102) selon l'une quelconque des revendications précédentes, comprenant en outre :
- un élément de commutation de tension d'alimentation (154) ayant une extrémité d'entrée connectée au fil unique (101) ;
- un condensateur de tension d'alimentation (158) connecté entre une extrémité de sortie de l'élément de commutation de tension d'alimentation (154) et la masse commune (101) ; et
- un circuit de commande (152) connecté à une extrémité de commande de l'élément de commutation de tension d'alimentation (154) et configuré pour commuter l'élément de commutation de tension d'alimentation (154) sur la base d'une différence de tension entre l'extrémité d'entrée et l'extrémité de sortie de l'élément de commutation de tension d'alimentation (154).

8. Interface monofil (102) selon la revendication 7, dans laquelle le circuit de commande (152) est configuré pour commuter l'élément de commutation de tension d'alimentation (154) sur un état conducteur lorsqu'une différence de potentiel entre le fil unique (100) et la masse commune (101) est supérieure à une différence de potentiel aux bornes du condensateur de tension d'alimentation (158).

9. Interface monofil (102) selon la revendication 7 ou 8, dans laquelle le circuit de commande (152) est un circuit inverseur logique.

10. Interface monofil (102) selon l'une quelconque des revendications 7 à 9, dans laquelle le circuit de commande (152) comprend :
- un premier transistor (156) d'un premier type de polarité connecté entre la masse commune (101) et l'extrémité de commande de l'élément de commutation de tension d'alimentation (154) ; et
- un second transistor (157) d'un second type de polarité connecté entre les extrémités de commande et de sortie de l'élément de commutation de tension d'alimentation (154), les extrémités de commande des premier (156) et second (157) transistors étant connectées à l'extrémité d'entrée de l'élément de commutation de tension d'alimentation (154).

11. Interface monofil (102) selon l'une quelconque des revendications 7 à 10, comprenant en outre un régulateur de tension d'alimentation (159) comportant :
- une entrée de régulateur (180) connectée à l'extrémité de sortie de l'élément de commutation de tension d'alimentation (154) ; et
- une sortie de régulateur (181) pour fournir une tension d'alimentation régulée (210) à une entrée de tension d'alimentation (182) du dispositif numérique (104).

12. Procédé d'interfaçage pour l'interfaçage entre un dispositif numérique (104) et un réseau monofil (100, 101) comprenant un fil unique (100) et une masse commune (101), le procédé comprenant :
- la réception d'une impulsion de signal (309, 409) à partir du réseau monofil (100, 101) ;
- la transmission de l'impulsion de signal (309, 409) à une entrée de données (108) du dispositif numérique (104) ;
**caractérisé par**
la fourniture d'un intervalle de retard prédéfini (305), plus long qu'une longueur d'impulsion courte prédéfinie (220) du réseau monofil (100, 101) et plus court qu'une longueur d'impulsion longue prédéfinie (222) du réseau monofil (100, 101), à partir d'une impulsion de départ (302) de l'impulsion de signal (309, 409) à l'entrée de données (108) ; et
la transmisstion, après l'intervalle de retard prédéfini (305), d'une impulsion d'horloge (311) à une entrée d'horloge (109) du dispositif numérique (104).

13. Procédé d'interfaçage selon la revendication 12, dans lequel l'impulsion d'horloge (311) a une durée (306) sensiblement égale à l'intervalle de retard prédéfini (305).

14. Procédé d'interfaçage selon la revendication 12 ou 13, comprenant en outre :
- la réception d'une impulsion de sortie du dispositif numérique (104) ;
- la détermination si l'impulsion d'horloge (311) est en cours de transmission ;
- la transmission de l'impulsion de sortie au réseau monofil (100, 101) seulement pendant que l'impulsion d'horloge (311) est en cours de transmission.

15. Procédé d'interfaçage selon l'une quelconque des revendications 12 à 14, comprenant en outre :
- la fourniture d'un élément de commutation de tension d'alimentation (154) ayant une extrémité d'entrée connectée au fil unique (101), et un condensateur de tension d'alimentation (158) connecté entre une extrémité de sortie de l'élément de commutation de tension d'alimentation (154) et la masse commune (101) ;
- la détermination d'une différence de tension entre l'extrémité d'entrée et une extrémité de sortie de l'élément de commutation de tension d'alimentation (154) ;
- la commutation de l'élément de commutation de tension d'alimentation (154) sur la base de la différence de tension pour charger le condensateur de tension d'alimentation (158).
